# EUROPÄISCHE PATENTSCHRIFT

(11) **EP 1 488 682 B1**
(45) Veröffentlichungstag und Bekanntmachung des Hinweises auf die Patenterteilung: **13.12.2006**
(21) Anmeldenummer: 04014279.6
(22) Anmeldetag: 18.06.2004
(51) Int. Cl.: A01D 78/10, A01B 73/04

(54) **Heuwerbungsmaschine**
Haymaking machine
Machine de fenaison

(30) Priorität: 20.06.2003 DE 10327705
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 1 433 372
- DE-A- 2 715 642
- DE-C- 19 716 379
- FR-A- 2 262 481
- US-A- 4 159 749

## Beschreibung

Die Erfindung bezieht sich auf eine Heuwerbungsmaschine, insbesondere zum Schwaden von landwirtschaftlichem Halmgut mit vier umlaufend angetriebenen und über Stützräder auf dem Erdboden abstützbaren sowie über Ausleger aus einer Arbeits- und Betriebsstellung in eine verschwenkte Transportstellung überführbaren Kreiselrechen in in einer Fahrtrichtung im wesentlichen V-förmiger Anordnung.

Eine Heuwerbungsmaschine der vorgenannten Art ist beispielsweise aus der DE 197 16 379 C1 bekannt. Bei dieser Maschine sind vier Kreiselrechen vorgesehen, wobei zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Die maximal mögliche Arbeitsbreite ist bei dieser Heuwerbungsmaschine gegenüber einer Heuwerbungsmaschine mit lediglich zwei Kreiselrechen deutlich erhöht, wird jedoch dem Wunsch nach noch größeren Arbeitsbreiten noch nicht gerecht.

Ein weiterer Nachteil besteht darin, dass in der Arbeits- und Betriebsstellung vor den vorderen Kreiselrechen auftretende Hindernisse lediglich mit einer deutlich abgeschwächten Lenkwirkung des vor der Heuwerbungsmaschine befindlichen Schleppers umfahren werden können. Insbesondere erst spät von dem Fahrer erkannte Hindernisse können daher oft erst durch ein aufwendiges Zurücksetzen der Heuwerbungsmaschine umfahren werden. Zudem ist die Führung der äußersten Kreiselrechen entlang der Grenze zwischen dem bearbeiteten und dem unbearbeiteten Feldstreifen, insbesondere bei nicht gerader Grenzlinie, nur unter Einbeziehung eines Überlappungsbereichs des Kreiselrechens mit dem bereits bearbeiteten Feldstreifen möglich. Die maximal mögliche Arbeitsbreite wird hierdurch reduziert.

Es ist daher Aufgabe der vorliegenden Erfindung, eine Heuwerbungsmaschine der eingangs genannten Art mit größerer Arbeitsbreite und verbessertem Fahrverhalten zu schaffen.

Zur Lösung dieser Aufgabe zeichnet sich die Heuwerbungsmaschine der eingangs genannten Art dadurch aus, dass den Kreiselrechen in der Arbeit- und Betriebsstellung in Fahrtrichtung zumindest zwei weitere, die maximale Arbeitsbreite bestimmende Kreiselrechen vorgeordnet sind, die Heuwerbungsmaschine als selbstfahrende Heuwerbungsmaschine mit einer in Fahrtrichtung vorderen gelenkten Maschinenachse und einer ungelenkten hinteren Maschinenachse ausgebildet ist, wobei die gelenkte Maschinenachse als starre Achse und die ungelenkte Maschinenachse als Pendelachse ausgebildet ist.

Damit ist eine Heuwerbungsmaschine zur Verfügung gestellt, bei der die wirksame Gesamtarbeitsbreite noch weiter zu erhöhen ist. Um trotz dieser vergrößerten Arbeitsbreite die Lenkbarkeit der Heuwerbungsmaschine zu verbessern, ist die Heuwerbungsmaschine als selbstfahrende Heuwerbungsmaschine ausgebildet. Eine Änderung der Bewegungsrichtung wird unmittelbar auf die Kreiselrechen übertragen. Die in Fahrtrichtung vordere Maschinenachse ist dabei gelenkt, während die hintere Maschinenachse ungelenkt ausgebildet ist. Die vorderen Kreiselrechen, die die maximale Arbeitsbreite der Heuwerbungsmaschine vorgeben, liegen im direkteren Einflussbereich der Lenkbewegung als die dahinter angeordneten Kreiselrechen. Hierdurch können die vorderen Kreiselrechen trotz der erheblich vergrößerten Arbeitsbreite sehr kontrolliert entlang der Grenze zwischen dem bearbeiteten und dem unbearbeiteten Feldstreifen geführt werden. Eine Lenkbewegung der Heuwerbungsmaschine über die in Fahrtrichtung vordere gelenkte Maschinenachse wirkt sich nur abgeschwächt auf die in Fahrtrichtung hinter der ungelenkten Maschinenachse befindlichen Kreiselrechen aus. Da diese den Schwad legen, ist sichergestellt, dass der Schwad trotz korrigierender Lenkbewegungen der Heuwerbungsmaschine sehr gerade und gleichmäßig verläuft.

Es ist vorgesehen, die ungelenkte Maschinenachse als Pendelachse auszubilden während gleichzeitig die vordere gelenkte Maschinenachse als starre Achse ausgebildet ist. Diese Anordnung wirkt sich vorteilhaft auf das Fahrverhalten der Heuwerbungsmaschine aus. Unebenheiten des Erdbodens werden vom Bediener direkt entweder frühzeitig visuell oder aber unmittelbar durch eine Querbewegung des Fahrzeugchassis während des Befahrens mit den vorderen Rädern bemerkt und er kann sein Fahrverhalten entsprechend anpassen. Während Unebenheiten im Bereich der hinteren Räder zum großen Teil durch die Pendelachse der hinteren Maschinenachse gegenüber dem Fahrzeugchassis abgefangen werden.

Ein weiterer Vorteil der Anordnung einer in Fahrtrichtung vorderen starren Maschinenachse und einer hinteren pendelnden Maschinenachse besteht in der verminderten Übertragung von Bodenunebenheiten auf die seitlichen Ausleger. Die Ausleger sind in der Arbeits- und Betriebsstellung um eine im wesentlichen horizontal zum Erdboden ausgerichtete an einem Tragrahmen der Heuwerbungsmaschine angeordnete Schwenkachse verschwenkbar. Bei entgegengesetzten Unebenheiten innerhalb der Aufstandsfläche der Heuwerbungsmaschine, bei denen die Verschwenkbarkeit der Ausleger ohne die erfindungsgemäße Anordnung in Grenzbereiche vordringen könnte, wird ein Teil der Unebenheiten von der Pendelachse abgefangen und nicht an die Ausleger weitergegeben. Um die Stabilität des Fahrwerks der Heuwerbungsmaschine dennoch sicherzustellen, ist die vordere gelenkte Achse als starre Achse ausgebildet. Diese kann jedoch durchaus eine Einzelradfederung der an ihr angeordneten Räder des Fahrwerks aufweisen und dadurch den Fahrkomfort für den Bediener erhöhen.

Eine vorteilhafte Ausgestaltung der Heuwerbungsmaschine sieht vor, dass das Abstandsmaß zwischen den Vertikallängsmittelachsen der weiteren Kreiselrechen und der ungelenkten Maschinenachse im Bereich von 80 bis 130 % des Abstandsmaßes zwischen der gelenkten Maschinenachse und der ungelenkten Maschinenachse liegt. Hierbei sind die vorderen Kreiselrechen in etwa auf der Höhe der gelenkten Maschinenachse oder in Fahrtrichtung kurz davor angeordnet. Die vorderen Kreiselrechen reagieren in diesem Bereich unmittelbar auf eine Lenkbewegung der vorderen gelenkten Achse und gleichseitig ist eine gute Übersicht des Bedieners über die vorderen Kreiselrechen sichergestellt. Ist jedoch die Position des Bedieners in der Arbeits- und Betriebsstellung nicht im Bereich der vorderen gelenkten Maschinenachse, sondern z.B. in Fahrtrichtung gegenüber dieser nach vorne versetzt angeordnet, kann es durchaus sinnvoll sein, dass das Abstandsmaß zwischen den Vertikallängsmittelachsen der weiteren Kreiselrechen und der ungelenkten Maschinenachse größer als 130 % des Abstandsmaßes zwischen der gelenkten Maschinenachse und der ungelenkten Maschinenachse ist.

Um bei solch großen mit der erfindungsgemäßen Heuwerbungsmaschine erreichbaren Arbeitsbreiten auch noch ein befriedigendes Heuwerbungsergebnis zu erzielen, sind die weiteren Kreiselrechen bevorzugt derart angeordnet, dass das Abstandsmaß der Vertikallängsmittelachsen der beiden in Fahrtrichtung jeweils benachbarten Kreiselrechen, die der ungelenkten Maschinenachse vorgeordnet sind, geringer ist als das Abstandsmaß der Vertikallängsmittelachsen der anderen in Fahrtrichtung benachbarten Kreiselrechen. Damit ist die Lage der Kreiselrechen zum Momentanpol der Maschine unter Berücksichtigung der Lenklaufeigenschaften derart vorgesehen, dass aufgrund der damit einhergehenden Überdeckungs- bzw. Überlappungsbereiche der wirksamen Bearbeitungsbereiche der Kreiselrechen auch bei Kurvenfahrten ein wirksames und sauberes Heuwerbungsergebnis zu erzielen ist. Dieses vorteilhafte Heuwerbungsergebnis ist auch zu erzielen, wenn der weitere Kreiselrechen in Abhängigkeit seines Durchmessers soweit an den nachgeordneten Kreiselrechen heranreicht, dass das kürzeste Abstandsmaß 0,1 bis 0,5 des Durchmessers des weiteren Kreiselrechens beträgt.

Weitere Vorteile und Einzelheiten der Erfindung ergeben sich aus den Unteransprüchen und in den Zeichnungen schematisch dargestellten Ausführungsbeispielen, die im folgenden beschrieben werden; es zeigen:
- Fig. 1: ein Draufsicht einer erfindungsgemäßen Heuwerbungsmaschine in der Arbeits- und Betriebsstellung der Teile,
- Fig. 2: eine Vorderansicht auf die Heuwerbungsmaschine nach Fig. 1,
- Fig. 3: ein Schnitt nach der Linie III - III in der Fig. 1 und
- Fig. 4: ein Schnitt nach der Linie IV - IV in der Fig. 1.

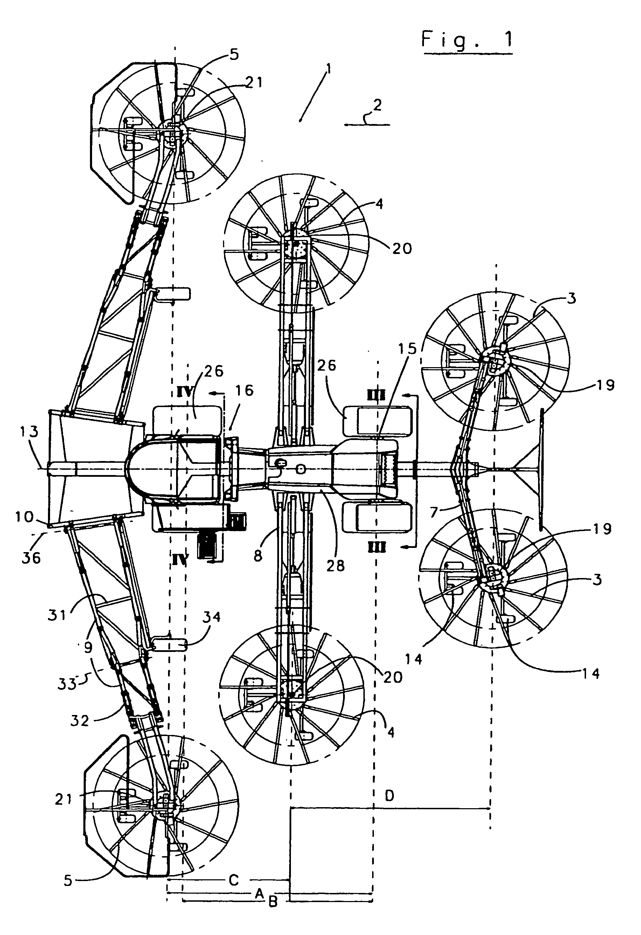

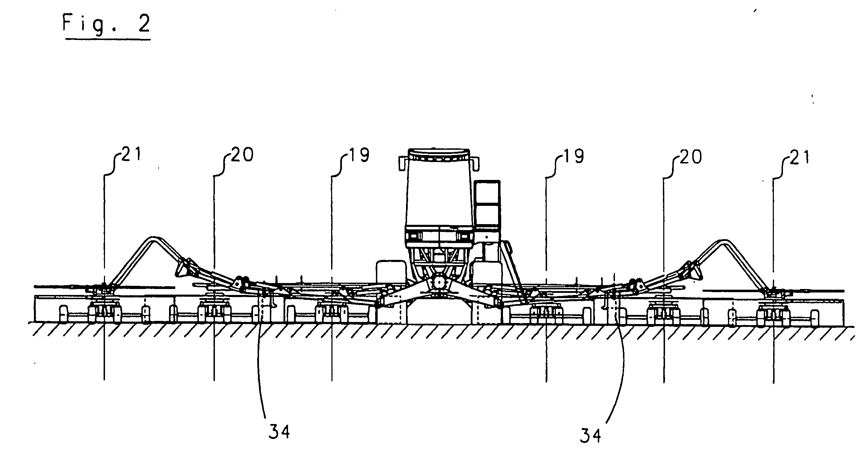

In den Fig. 1 und 2 ist allgemein mit 1 eine selbstfahrende Heuwerbungsmaschine beziffert. In in Fahrtrichtung 2 V-förmiger Anordnung sind hintere Kreiselrechen 3, mittlere Kreiselrechen 4 und zwei weitere vordere Kreiselrechen 5 vorgesehen, die jeweils über Ausleger 7, 8 sowie 9 an einem Tragrahmen 10 der Heuwerbungsmaschine 1 mit seiner Maschinenlängsachse 13 abgestützt sind. Die Kreiselrechen 3, 4 und 5 sind über Stützräder 14 während ihrer Arbeits- und Betriebsstellung, wie in Fig. 1 veranschaulicht, auf dem Erdboden abstützbar. Die in Fahrtrichtung 2 hintere Maschinenachse 15 ist ungelenkt, während die in Fahrtrichtung 2 vordere Maschinenachse 16 gelenkt ausgebildet ist.

Die Kreiselrechen 3, 4 und 5 sind jeweils um Vertikallängsmittelachsen 19, 20 und 21 umlaufend angetrieben. Das Abstandsmaß A zwischen den Vertikallängsmittelachsen 21 der weiteren Kreiselrechen 5 und der ungelenkten Maschinenachse 15 ist vorzugsweise größer als 80 % des Abstandsmaßes B zwischen der gelenkten Maschinenachse 16 und der ungelenkten Maschinenachse 15. Hierdurch befinden sich die in Fahrtrichtung 2 vorderen Kreiselrechen 5 im Bereich eines direkten Einflusses der Lenkbewegung der Heuwerbungsmaschine 1. Die vorderen Kreiselrechen 5, die die maximale Arbeitsbreite der Heuwerbungsmaschine 1 vorgeben, können hierdurch trotz der erheblich vergrößerten Arbeitsbreite sehr kontrolliert entlang einer Grenze zwischen einem bereits bearbeiteten und einem unbearbeiteten Feldstreifen geführt werden.

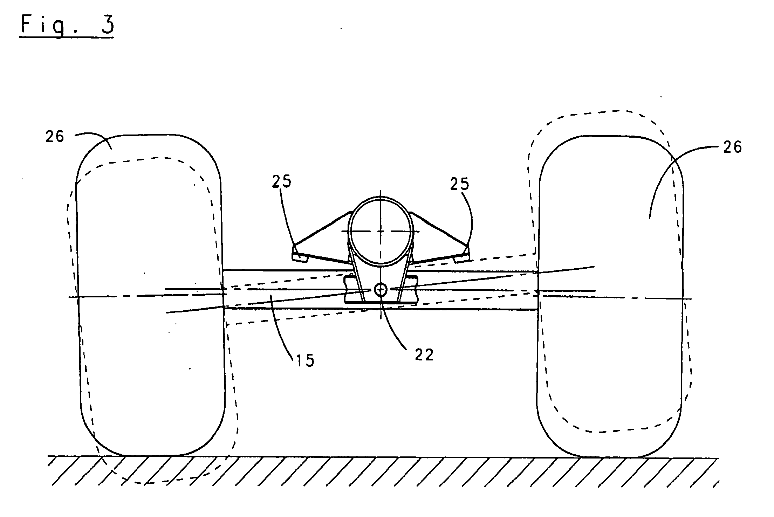

Die hintere ungelenkte Maschinenachse 15 ist, wie in Fig. 3 veranschaulicht, als Pendelachse, ausgebildet. Die hintere Achse 15 ist um eine Achsaufhängungsachse 22 verschwenkbar. Die Verschwenkbarkeit wird von Begrenzungselementen 25 eingeschränkt. Die Achse 15 verbindet zwei Räder 26 miteinander. Bewegt sich eines der Räder 26 aufgrund einer Unebenheit des Erdbodens, z. B. vertikal zur Fahrtrichtung 2 in Richtung des Erdbodens, so bewegt sich das andere der Räder 26 in die entgegengesetzte Richtung.

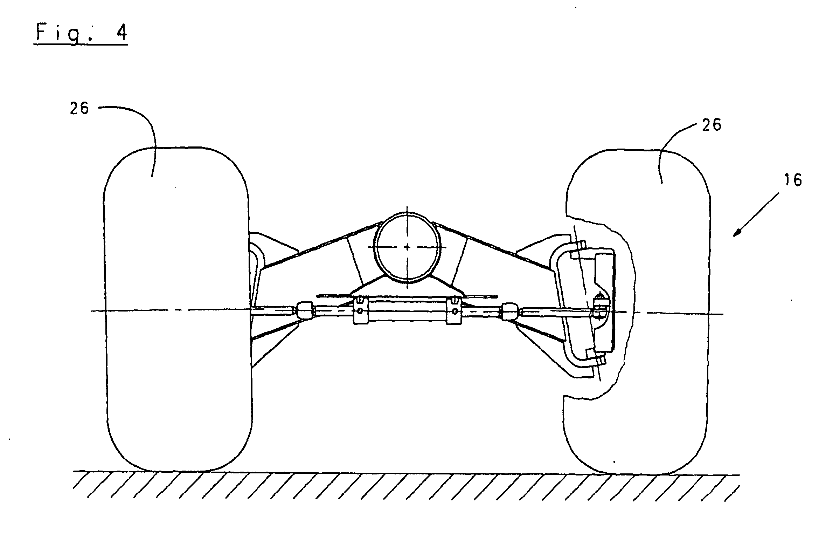

Die starre, aber gelenkte Achse 16 ist in Fig. 4 dargestellt. Die vordere Achse 16 kann eine in den Zeichnungen nicht dargestellte Einzelradfederung aufweisen. Die vordere Achse 16 stabilisiert ein Fahrzeugchassis 28 der Heuwerbungsmaschine 1 und den Tragrahmen 10, so dass dieses bei der bevorzugten Kombination aus in Fahrtrichtung 2 vorderer starrer Achse und hinterer bewegter Achse, insbesondere Pendelachse, lediglich deutlich reduzierte Querbewegungen zur Fahrtrichtung 2 ausführt.

Bevorzugtermassen ist das Abstandsmaß C zwischen den Vertikallängsmittelachsen 21 und 20 der beiden in Fahrtrichtung hintereinander angeordneten sowie der ungelenkten Maschinenachse 15 vorgeordneten Kreiselrechen 5 und 4 geringer als das Abstandsmaß D der Vertikallängsmittelachsen 20 und 19 der zwei in Fahrtrichtung benachbart angeordneten Kreiselrechen 4 und 3. Damit ist sichergestellt, dass auch in Kurvenfahrten bei der angestrebten enormen Arbeitsbreite eine saubere Schwadbildung möglich ist. Um diese saubere Schwadbildung zu unterstützen, beträgt das Abstandsmaß C vorzugsweise 40 bis 100 % des Abstandsmaßes D.

Der jeweilige Ausleger 9 der beiden weiteren vorderen Kreiselrechen 5 ist unterteilt in einen zum Tragrahmen 10 hin ersten als Stützarm 31 bezeichneten Bereich und in einen sich daran anschließenden als Endstützarm 32 bezeichneten weiteren Bereich, an dem endständig der Kreiselrechen 5 angeordnet ist. Der Endstützarm 32 wird von dem Stützarm 31 durch eine im wesentlichen horizontale Schwenkachse 33 getrennt und ist um diese Schwenkachse 33 gegenüber dem Stützarm 31 verschwenkbar. An dem Stützarm 31 ist ein Laufrad 34 vorzugsweise in der Nähe der Schwenkachse 33 angeordnet. Das Laufrad 34 ist dabei in Fahrtrichtung 2 gegenüber dem Ausleger 9 frei pendelnd nachlaufend angeordnet. Zum Anheben des weiteren Kreiselrechens 5 während der Feldarbeit, z. B. zum Wenden und Rangieren oder zum Überqueren bereits gelegter Schwade, ist der Kreiselrechen 5 durch ein Verschwenken des Endstützarms 32 gegenüber dem Stützarm 31 um die Schwenkachse 33 in die Höhe verbringbar. Das Gewicht des Endstützarms 32 und des Kreiselrechens 5 lastet dabei überwiegend auf dem Laufrad 34. Die beiden in Fahrtrichtung 2 vorderen Ausleger 9 stehen bevorzugt in einen spitzen Winkel zur Maschinenlängsachse 13 der Heuwerbungsmaschine 1, so dass in der Arbeits- und Betriebsstellung die Vertikallängsmittelachse 21 des daran angeordneten Kreiselrechens 5 in Fahrtrichtung 2 hinter dem Mittelpunkt einer am Tragrahmen 10 angeordneten weiteren im wesentlichen horizontalen Schwenkachse 36 befindet.

Es ist selbstverständlich, dass die aus Vorstehendem ersichtliche Erfindung nicht nur bei Heuwerbungsmaschinen, sondern auch bei solchen Maschinen mit anderen rotierenden Werkzeugen Anwendung finden kann, wo es auf die Lage des Momentanpol und zum Beispiel eine saubere Erntegutablage ankommt. So können beispielsweise auch Mähmaschinen mit rotierenden Mähwerken in analoger Anordnung der Mähwerke wie die Kreiselrechen mit entsprechenden Abständen vorgesehen sein.

## Patentansprüche

1. Heuwerbungsmaschine, insbesondere zum Schwaden von landwirtschaftlichem Halmgut mit vier umlaufend angetriebenen und über Stützräder (14) auf dem Erdboden abstützbaren sowie über Ausleger (7, 8) aus einer Arbeits- und Betriebsstellung in eine verschwenkte Transportstellung überführbaren Kreiselrechen (3, 4) in in einer Fahrtrichtung (2) im wesentlichen V-förmiger Anordnung, **dadurch gekennzeichnet, dass** den Kreiselrechen (3, 4) in der Arbeit- und Betriebsstellung in Fahrtrichtung (2) zumindest zwei weitere, die maximale Arbeitsbreite bestimmende Kreiselrechen (5) vorgeordnet sind, die Heuwerbungsmaschine (1) als selbstfahrende Heuwerbungsmaschine mit einer in Fahrtrichtung (2) vorderen gelenkten Maschinenachse (16) und einer ungelenkten hinteren Maschinenachse (15) ausgebildet ist, wobei die gelenkte Maschinenachse (16) als starre Achse und die ungelenkte Maschinenachse (15) als Pendelachse ausgebildet ist.

2. Heuwerbungsmaschine nach Anspruch 1, **dadurch gekennzeichnet, dass** das Abstandsmaß A zwischen den Vertikallängsmittelachsen (21) der weiteren Kreiselrechen (5) und der ungelenkten Maschinenachse (15) größer als 80 % des Abstandsmaßes B zwischen der gelenkten Maschinenachse (16) und der ungelenkten Maschinenachse (15) beträgt.

3. Heuwerbungsmaschine nach einem der Ansprüche 1 bis 2, **dadurch gekennzeichnet, dass** an der gelenkten Maschinenachse (16) Räder (26) mit einer Einzelradfederung angeordnet sind.

4. Heuwerbungsmaschine nach einem der Ansprüche 1 bis 3, **dadurch gekennzeichnet, dass** das Abstandsmaß C der Vertikallängsmittelachsen (21, 20) von zwei in Fahrtrichtung (2) hintereinander angeordneten sowie der ungelenkten mit Rädern (26) versehenen Maschinenachse (15) vorgeordneten Kreiselrechen (5, 4) geringer ist, als das Abstandsmaß D der Vertikallängsmittelachsen (20, 19) der zwei in Fahrtrichtung (2) benachbart angeordneten Kreiselrechen (4, 3).

5. Heuwerbungsmaschine nach einem der Ansprüche 1 bis 4, **dadurch gekennzeichnet, dass** das Abstandsmaß C der Vertikallängsmittelachsen (21, 20) der beiden in Fahrtrichtung (2) hintereinander angeordneten der ungelenkten Maschinenachse (15) vorgeordneten Kreiselrechen (5, 4) 40 bis 100 % des Abstandsmaßes D der Vertikallängsmittelachsen (20,19) der beiden benachbarten Kreiselrechen (4, 3) beträgt.

6. Heuwerbungsmaschine nach einem der Ansprüche 1 bis 5, **dadurch gekennzeichnet, dass** die beiden weiteren Kreiselrechen (5) an Auslegern (9) abstützbar sind, die in der Arbeits- und Betriebsstellung unter einem spitzen Winkel zur Maschinenlängsachse (13) ausgerichtet sind.

7. Heuwerbungsmaschine nach einem der Ansprüche 1 bis 6, **dadurch gekennzeichnet, dass** die beiden weiteren Kreiselrechen (5) jeweils über einen zweigeteilten Ausleger (9) abstützbar sind, wobei ein Endstützarm (32) des Auslegers (9) relativ zu einem Stützarm (31) verschwenkbar ist.

8. Heuwerbungsmaschine nach einem der Ansprüche 1 bis 7, **dadurch gekennzeichnet, dass** die beiden weiteren Kreiselrechen (5) über Ausleger (9) abstützbar sind, die sich gegenüber dem Erdboden über Laufräder (34) abstützen.

9. Heuwerbungsmaschine nach einem der Ansprüche 1 bis 8, **dadurch gekennzeichnet, dass** in Fahrtrichtung (2) ein Kreiselrechenpaar (3) hinter der ungelenkten Maschinenachse (15), ein weiteres Kreiselrechenpaar (4) zwischen der ungelenkten Maschinenachse (15) und der gelenkten Maschinenachse (16) und die beiden weiteren Kreiselrechen (5) vor der gelenkten Maschinenachse (16) angeordnet sind.

10. Heuwerbungsmaschine nach einem der Ansprüche 1 bis 9, **dadurch gekennzeichnet, dass** das kürzeste Abstandsmaß E zwischen dem weiteren Kreiselrechen (5) und dem benachbarten Kreiselrechen (4) 10 % bis 50 % des Durchmessers F des weiteren Kreiselrechens (5) beträgt.

## Claims

1. Haymaking machine, particularly for windrowing stalked agricultural crops, having four rotary rakes (3, 4) in a substantially V-shaped arrangement in one direction of travel (2), which rotary rakes (3, 4) are driven in rotation, are able to be supported on the ground by means of supporting wheels (14) and are able to be transferred from a working and operating position to a pivoted position for transport by means of booms (7, 8), **characterised in that**, in the working and operating position, the rotary rakes (3, 4) have positioned in front of them in the direction of travel (2) at least two further rotary rakes (5) which determine the maximum working width, and the haymaking machine (1) is in the form of a self-propelled haymaking machine having a steered axle (16) at the front in the direction of travel (2) and an unsteered axle (15) at the rear, the steered axle (16) of the machine taking the form of a rigid axle and the unsteered axle (15) of the machine that of a swinging axle.

2. Haymaking machine according to claim 1, **characterised in that** the distance A between the vertical longitudinal centre axes (21) of the further rotary rakes (5) and of the unsteered axle (15) of the machine is more than 80% of the distance B between the steered axle (16) of the machine and the unsteered axle (15) of the machine.

3. Haymaking machine according to one of claims 1 to 3, **characterised in that** independently sprung wheels (26) are arranged on the steered axle (16) of the machine.

4. Haymaking machine according to one of claims 1 to 4, **characterised in that** the distance C between the vertical longitudinal centre axes (21, 20) of two rotary rakes (5, 4) which are arranged one behind the other in the direction of travel (2) and which are positioned in front of the unsteered axle (15) of the machine provided with wheels (26) is less than the distance D between the vertical longitudinal centre axes (20, 19) of the two rotary rakes (4, 3) which are arranged to be adjacent in the direction of travel (2).

5. Haymaking machine according to one of claims 1 to 5, **characterised in that** the distance C between the vertical longitudinal centre axes (21, 20) of the two rotary rakes (5, 4) which are arranged one behind the other in the direction of travel (2) and which are positioned in front of the unsteered axle (15) of the machine is 40 to 100% of the distance D between the vertical longitudinal centre axes (20, 19) of the two adjacent rotary rakes (4, 3).

6. Haymaking machine according to one of claims 1 to 6, **characterised in that** the two further rotary rakes (5) can be supported on booms (9) which are aligned at an acute angle to the longitudinal axis (13) of the machine in the working and operating position.

7. Haymaking machine according to one of claims 1 to 7, **characterised in that** the two further rotary rakes (5) can be supported by means of respective booms (9) which are divided into two, an end support-arm (32) of the boom (9) being pivotable relative to a support-arm (31).

8. Haymaking machine according to one of claims 1 to 8, **characterised in that** the two further rotary rakes (5) can be supported by means of booms (9) which can be supported in relation to the ground by means of wheels (34) for movement.

9. Haymaking machine according to one of claims 1 to 9, **characterised in that**, in the direction of travel (2), one pair (3) of rotary rakes is arranged behind the unsteered axle (15) of the machine, a further pair (4) of rotary rakes is arranged between the unsteered axle (15) of the machine and the steered axle (16) of the machine and the two other rotary rakes (5) are arranged in front of the steered axle (16) of the machine.

10. Haymaking machine according to one of claims 1 to 10, **characterised in that** the shortest distance E between the further rotary rake (5) and the adjacent rotary rake (4) is 10% to 50% of the diameter F of the further rotary rake (5).

## Revendications

1. Machine de fenaison notamment pour andainer des produits agricoles en tiges, comportant quatre rotors racleurs (3, 4) entraînés en rotation et s'appuyant sur le sol par des roues de sustentation (14) et portés par des bras (7, 8) essentiellement suivant une disposition en V, pour passer d'une position active et de fonctionnement à une position basculée, de transport, dans la direction de déplacement (2),
**caractérisée par**
au moins deux autres rotors racleurs (5) définissant la largeur de travail maximale, associés aux rotors racleurs (3, 4) en position active et de fonctionnement, dans la direction de déplacement (2),
l'andaineuse (1) étant réalisée sous la forme d'une andaineuse automotrice ayant un essieu de machine (16) directeur, avant selon la direction de déplacement (2) et un essieu de machine (15), arrière non articulé,
l'essieu directeur (16) étant un essieu rigide et l'essieu non articulé (15) étant un essieu pendulaire.

2. Machine de fenaison selon la revendication 1,
**caractérisée en ce que**
la distance A entre les axes médians longitudinaux (22) des autres rotors racleurs (5) et de l'essieu non articulé (15) est supérieure à 80 % de la mesure de l'intervalle B entre l'essieu directeur (16) et l'essieu non articulé (15).

3. Machine de fenaison selon l'une des revendications 1 à 2,
**caractérisée par**
des roues (26) à suspension indépendante prévues sur l'essieu directeur (16).

4. Machine de fenaison selon l'une des revendications 1 à 3,
**caractérisée en ce que**
la mesure de la distance C entre les axes médians verticaux dans la direction longitudinale (21, 20) des deux rotors racleurs (5, 6) qui se succèdent dans la direction de déplacement (2) et de l'essieu (15) non directeur muni des roues (16) est inférieure à la distance D entre les axes médians verticaux longitudinaux (20, 19) des deux rotors racleurs (4, 3) voisins dans la direction de déplacement (2).

5. Machine de fenaison selon l'une des revendications 1 à 4,
**caractérisée en ce que**
la distance C de l'intervalle entre les axes médians verticaux longitudinaux (21, 20) des deux rotors racleurs (5, 4), associés l'un derrière l'autre dans la direction de déplacement (2) de l'essieu non directeur (15) de la machine correspond à 40 - 100 % de la mesure de la distance D entre les axes médians longitudinaux verticaux (20, 19) des deux rotors racleurs voisins (4, 3).

6. Machine de fenaison selon l'une des revendications 1 à 5,
**caractérisée en ce que**
les deux autres rotors racleurs (5) sont appuyés sur des flèches (9) qui en position active et de fonctionnement sont alignées suivant un angle aigu par rapport à l'axe longitudinal (13) de la machine.

7. Machine de fenaison selon l'une des revendications 1 à 6,
**caractérisée en ce que**
les deux autres rotors racleurs (5) sont chaque fois appuyés par une flèche (9) divisé en deux parties, le bras d'appui d'extrémité (32) de la flèche (9) pouvant basculer par rapport au bras d'appui (31).

8. Machine de fenaison selon l'une des revendications 1 à 7,
**caractérisée en ce que**
les deux autres rotors racleurs (5) s'appuient par des flèches (9) s'appuyant sur le sol par des roues de sustentation (34).

9. Machine de fenaison selon l'une des revendications 1 à 8,
**caractérisée en ce que**
dans la direction de déplacement (2), une paire de rotors racleurs (3) se trouve derrière l'essieu non directeur (15) de la machine, une autre paire de rotors racleurs (4) se trouve entre l'essieu non directeur (15) et l'essieu directeur (16) de la machine et les deux autres rotors racleurs (5) se trouvent devant l'essieu directeur (16) de la machine.

10. Machine de fenaison selon l'une des revendications 1 à 9,
**caractérisée en ce que**
la mesure E de la distance la plus courte entre l'autre rotor racleur (5) et le rotor racleur voisin (4) représente entre 10 % et 50 % du diamètre F de l'autre rotor racleur (5).
